# EUROPÄISCHE PATENTANMELDUNG

(11) **EP 4 454 462 A1**
(43) Veröffentlichungstag der Anmeldung: **30.10.2024**
(21) Anmeldenummer: 24171569.7
(22) Anmeldetag: 22.04.2024
(51) Int. Cl.: A21B 3/13

(54) **FORM**

(30) Priorität: 24.04.2023 DE 102023110427
(71) Anmelder: coox GmbH, 42103 Wuppertal (DE)
(72) Erfinder: Elsen, Marc-Hamid, 42369 Wuppertal (DE)
(74) Vertreter: Roche, von Westernhagen & Ehresmann

(57) **Zusammenfassung**

Die Erfindung betrifft unter anderem eine Form (10) zur Aufnahme von Lebensmitteln nach Art einer Back- oder Kochform, umfassend einen Boden (11) und wenigstens vier Seitenwände (12a, 12b, 12c, 12d), wobei die Seitenwände (12a, 12b, 12c, 12d) aus einem flachliegenden Zustand, in dem die Form nach Art einer Matte ausgebildet ist, in eine relativ zu dem Boden (11) aufrechte Gebrauchsposition überführbar und in ihrer Gebrauchsposition lösbar verriegelbar sind, wobei der Boden (11) und die Seitenwände (12a, 12b, 12c, 12d) aus einem flexiblen Kunststoff (22, 23) bestehen, dadurch gekennzeichnet, dass sich entlang einer Unterseite (18) des Bodens (11) ein umlaufender Rahmen (17) erstreckt.

## Beschreibung

Die Erfindung bezieht sich auf eine Form zur Aufnahme von Lebensmitteln nach dem Oberbegriff des Anspruches 1.

Eine solche Form ist in der DE 10 2016 123 167 A1 offenbart.

Bei der Form des Standes der Technik besteht die gesamte Form aus einem flexiblen Kunststoff, insbesondere aus einem Lebensmittel echten Silikon-Kautschuk. Im Bereich der oberen Randbereiche der Seitenwände sind Verstärkungseinlagen vorgesehen, die der Form eine gewisse Struktur geben.

Die Form ist mittlerweile gut eingeführt und erfreut sich zunehmender Beliebtheit.

Ausgehend von einer Form des Standes der Technik mit den Merkmalen des Oberbegriffes des Anspruches 1 liegt die Aufgabe der Erfindung darin, die bekannte Form derartig weiterzuentwickeln, dass sie eine verbesserte Handhabung bietet.

Die Erfindung löst diese Aufgabe mit den Merkmalen des Anspruches 1, insbesondere mit denen des Kennzeichenteils, und ist demgemäß dadurch gekennzeichnet, dass sich entlang einer Unterseite des Bodens ein umlaufender Rahmen erstreckt.

Das Prinzip der Erfindung besteht im Wesentlichen darin, an der Unterseite einen Rahmen vorzusehen, der den Boden versteift. Der Rahmen ist umlaufend ausgebildet, folgt also im Wesentlichen der Randkontur des Bodens.

Der Boden kann beispielsweise eine rechteckförmige oder quadratische Kontur aufweisen. Der Rahmen weist dann gleichermaßen, angepasst an die Kontur des Bodens, eine rechteckförmige oder quadratische Kontur auf.

Der Rahmen kann beispielsweise aus Metall, oder aus einem härteren Kunststoff bestehen. Er besteht in jedem Fall aus einem Material, dass deutlich härter und unflexibler ist, als der Kunststoff, aus dem die Bodenwand und aus dem die Seitenwände gebildet sind. Von der Erfindung ist auch umfasst, wenn der Rahmen nur einen Kern aus Metall oder aus einem härteren Material umfasst und mit einem weichen Kunststoff ummantelt ist. Der metallische Kern kann beispielsweise von einem gebogenen Rundstahl bereitgestellt sein.

Der Rahmen ist erfindungsgemäß an der Unterseite des Bodens angeordnet. Dies bietet die Möglichkeit, die Oberseite des Rahmens durchgehend plan auszugestalten.

Die Handhabung der erfindungsgemäßen Form ist gegenüber dem Stand der Technik verbessert. Während beim Stand der Technik die Form insgesamt, aufgrund der Materialbeschaffenheit des flexiblen Kunststoffes, weich, sozusagen wabbelig, gehalten war, und schwierig definiert zu greifen war, bringt der erfindungsgemäße umlaufende Rahmen ein zusätzliches Strukturelement in die Form ein. Die Form kann im nicht montierten Zustand, während der Montage, aber auch in Gebrauchsposition, einfacher gegriffen und gehandhabt werden. Die Montage - gleichermaßen auch die Demontage - gestalten sich komfortabler, da die Form definierter gegriffen werden kann.

Dadurch, dass die Form erfindungsgemäß einen Rahmen aufweist, der sich entlang einer Unterseite des Bodens erstreckt, ist die Form darüber hinaus mit der Unterseite des Bodens von einer Auflagefläche geringfügig beabstandet angeordnet. Dies erleichtert die Handhabung einer mit Lebensmittel befüllten Form.

Dieser Effekt wird in einer vorteilhaften Ausführungsform der Erfindung dadurch noch weiter verstärkt, dass der Rahmen nach innen eingerückt, also bezüglich der Randkontur des Bodens nach innen versetzt angeordnet sein kann.

Der erfindungsgemäß vorgesehene umlaufende Rahmen stellt darüber hinaus eine Art Abstandshalterung der Unterseite des Bodens von einer Auflagefläche bereit. Hierdurch kann nach einem Backen oder Kochen oder Frieren der Lebensmittel in der Form ein Wärmetransfer von der Form und den Lebensmitteln auf eine Auflagefläche reduziert bzw. definiert werden.

Dies kann nach Beobachtungen der Anmelderin bei erhitzten Lebensmitteln z.B. auch zu reduzierten Kondenswasserbildungen an der Auflagefläche führen.

Auch das Risiko eines Festklebens der Form an einer Auflagefläche wird reduziert.

Das Handling der Form wird erfindungsgemäß beim Zusammenbau, aber auch bei der Demontage der Form erleichtert, weil die Bedienperson insbesondere einen Abschnitt an einer Längsseite des Rahmens zusammen mit der Form gut fassen kann und definiert greifen und halten kann.

Darüber hinaus ist die Faltbarkeit der Form erleichtert, da die Sollbiegebereiche zwischen Seitenwand und Boden radial außerhalb des Rahmens angeordnet sind, wobei dadurch die Faltlinien oder Sollbiegelinien in Folge der Präsenz des Rahmens noch betont werden. Ein Hochklappen der Seitenwände erfolgt quasi automatisch entlang der vorgegebenen Sollliegelinien.

Darüber hinaus ist eine Unterbringung der Form im flachliegenden Zustand erleichtert, wenn die Längsseitenwände auf die Bodenwand herausgeklappt sind. Hierdurch wird eine definierte vorgegebene Breite erreicht und zugleich eine gute Handhabung bei der Unterbringung der Form.

Für den Fall, dass Lebensmittel in der Form gefroren werden, beispielsweise zu einem Sorbet, ist das Risiko eines Festfrierens des Bodens der Form gegenüber einer Form des Standes der Technik erheblich reduziert.

Der Offenbarungsgehalt der DE 10 2016 123 167 A1 wird hiermit in den Offenbarungsgehalt der vorliegenden Patentanmeldung mit eingeschlossen, dies auch zu dem Zwecke, Merkmale aus dieser älteren Druckschrift in die Merkmale dieser Anmeldung, auch in die Merkmale der Ansprüche dieser Anmeldung, bei Bedarf mit aufzunehmen. Ein solcher Einschluss in den Offenbarungsgehalt erfolgt zur Vermeidung von Wiederholungen.

Gemäß einer vorteilhaften Ausgestaltung der Erfindung besteht der Rahmen aus einem Material oder umfasst ein Material, das härter ist, als der Kunststoff. Gemäß dieser vorteilhaften Ausgestaltung der Erfindung ist die Form von einer Bedienperson vor, während und nach der Montage einfacher und definierter greifbar.

Gemäß einer vorteilhaften Ausgestaltung der Erfindung besteht der Rahmen aus Metall oder umfasst einen Kern aus Metall. Dies ermöglicht eines besonders einfache Bauweise und Konstruktion.

Gemäß einer vorteilhaften Ausgestaltung der Erfindung ist der Rahmen von einem Mantel aus Weichkunststoff umgeben. Diese Ausgestaltung ermöglicht eine einheitliche Haptik über die gesamte Oberfläche der Form.

Gemäß einer vorteilhaften Ausgestaltung der Erfindung ist der Rahmen von der Unterseite des Bodens nach unten vorstehend ausgebildet. Diese Ausgestaltung der Erfindung ermöglicht einen definierten, nur sehr schmalen Kontaktbereich der Form mit einer Auflagefläche. Hierdurch kann ein Wärmetransfer definiert und optimiert werden.

Gemäß einer vorteilhaften Ausgestaltung der Erfindung ist eine Oberseite des Bodens durchgängig plan ausgebildet. Dies ermöglicht beispielsweise bei einem Backen oder Kochen oder Gefrieren von Lebensmitteln die Erzielung einer glatten Unterseite des Lebensmittelgutes.

Gemäß einer vorteilhaften Ausgestaltung der Erfindung ist der Boden rechteckig ausgebildet. Dies ermöglicht einen Rückgriff auf herkömmliche Geometrien bekannter Backformen, z.B. nach Art einer Kastenbackform oder einer anderen Quaderform.

Gemäß einer vorteilhaften Ausgestaltung der Erfindung folgt der Rahmen einer Randkontur des Bodens. Diese Ausgestaltung ermöglicht eine besonders stabile Positionierung der Form auf einer Auflagefläche.

Gemäß einer vorteilhaften Ausgestaltung der Erfindung ist der Rahmen im Wesentlichen rechteckig ausgebildet und umfasst vier geradlinig ausgebildete oder nur geringfügig gekrümmt ausgebildete Abschnitte, die parallel oder im Wesentlichen parallel zu Randkanten des Bodens ausgerichtet sind. Diese Ausgestaltung der Erfindung ermöglicht eine einfache Herstellung und eine optimierte Handhabbarkeit der Form.

Gemäß einer vorteilhaften Ausgestaltung der Erfindung ist der Rahmen umlaufend relativ zu Randkanten des Bodens nach innen eingerückt angeordnet. Diese Ausgestaltung der Erfindung ermöglicht einen Verzicht auf scharfe Kanten oder Ecken.

Diese Ausgestaltung der Erfindung ermöglicht auch eine besonders einfache Greifbarkeit, z.B. zum Lösen oder Anheben der Form von einer Auflagefläche.

Gemäß einer vorteilhaften Ausgestaltung der Erfindung weist der Rahmen einen rechteckigen Querschnitt insbesondere einen quadratischen oder im wesentlichen quadratischen Querschnitt auf. Diese Ausgestaltung der Erfindung ermöglicht eine besonders einfache Bauweise und Konstruktion und Herstellung.

Gemäß einer vorteilhaften Ausgestaltung der Erfindung weist der Querschnitt des Rahmens eine Höhe, gemessen entlang einer Richtung quer zu einer Erstreckung des Bodens auf, die zwischen 3 und 8 mm beträgt. Diese Ausgestaltung der Erfindung ermöglicht eine definierte Beabstandung der Unterseite des Bodens von einer Auflagefläche.

Gemäß einer vorteilhaften Ausgestaltung der Erfindung weist ein Querschnitt des Rahmens eine Breite auf, gemessen entlang einer Richtung quer zu einer Längserstreckung des Rahmens, und entlang einer Erstreckung des Bodens, die zwischen 3 und 8 mm beträgt. Diese Ausgestaltung der Erfindung ermöglicht eine besonders einfache Bauweise.

Gemäß einer vorteilhaften Ausgestaltung der Erfindung sind an einem oberen Rand von wenigstens zwei einander gegenüberliegenden Seitenwänden, insbesondere an einem oberen Rand einer jeden Seitenwand, gradlinig ausgebildete Verstärkungselemente angeordnet. Diese Ausgestaltung der Erfindung ermöglicht eine Bereitstellung einer Form mit einer Art Skelettstruktur der Form im montierten Zustand und eine optimierte Handhabbarkeit.

Gemäß einer vorteilhaften Ausgestaltung der Erfindung weisen die Verstärkungselemente einen rechteckigen Querschnitt auf. Diese Ausgestaltung der Erfindung ermöglicht einen Rückgriff auf bekannte Bauelemente einer Form.

Gemäß einer vorteilhaften Ausgestaltung der Erfindung ist zwischen jeweils zwei einander benachbart angeordneten Seitenwänden ein Verbindungslappen aus flexiblen Kunststoffmaterial vorgesehen ist, der entlang einer Mittellinie bei Überführung der Seitenwände in ihre Gebrauchsposition unter Bereitstellung einer Abdichtung eines Innenraumes der Form taschenartig faltbar ist. Diese Ausgestaltung der Erfindung ermöglicht eine Dichtigkeit, insbesondere Flüssigkeitsdichtigkeit und eine Unterbringung der Lebensmittel in einem Innenraum der Form und stellt eine Auslaufsicherheit bereit.

Weitere Vorteile der erfindungsgemäßen Vorrichtung ergeben sich anhand der nicht zitierten Unteransprüche sowie aus der nachfolgenden Beschreibung der in den Zeichnungen dargestellten Ausführungsbeispiele.

Darin zeigen:
- Fig. 1: die Form, in einem flachliegenden Zustand in einer Unteransicht, wobei der umlaufende Rahmen zu sehen ist,
- Fig. 2: in einer teilgeschnittenen, schematischen Ansicht die Form der Figur 1, etwa entlang Ansichtspfeil II in Figur 1, zur Veranschaulichung einer schlüssellochartig ausgebildeten Aufnahme,
- Fig. 3: in einer teilgeschnittenen, schematischen Ansicht etwa entlang Ansichtspfeil III in Figur 1, einen Bereich der Seitenwand mit einem Verriegelungselement,
- Fig. 4: in einer teilgeschnittenen, schematischen Darstellung die Form der Figur 1, etwa entlang Schnittlinie IV-IV in Figur 1, wobei der umlaufende Rahmen im Schnitt dargestellt ist,
- Fig. 5: in einer teilgeschnittenen, schematischen Darstellung die Form der Figur 1, etwa entlang Schnittlinie V-V in Figur 1, unter Darstellung eines streifenförmigen Versteifungselementes und eines Verriegelungselementes,
- Fig. 6: in einer teilgeschnittenen, schematischen Ansicht die Form der Figur 1 in einer Ansichtsdarstellung gemäß Ansichtspfeil VI in Figur 1,
- Fig. 7: die Form der Figur 1 in einer schematischen, teilgeschnittenen Ansicht entlang der Schnittlinie VII-VII in Figur 1,
- Fig. 8: die Form der Figur 1 in einer perspektivischen Rückansicht in einem Zwischenmontagezustand, wobei die beiden Längsseitenwände zuvor bereits von einer flachliegenden Position in eine aufrechte Position bzw. eine Zwischenposition verlagert worden sind, wobei die Form der Figur 8 nicht maßstäblich zu der Form der Figur 1 dargestellt ist, sondern nur illustrativen Zwecken dient,
- Fig. 9: die Form der Figur 1 in einer Darstellung gemäß Figur 8, wobei sich sämtliche Seitenwände in einer aufrechten Gebrauchsposition befinden, wobei die Seitenwände aber noch nicht aneinander verriegelt sind,
- Fig. 10a: die Form der Figur 1 in einer Darstellung gemäß Figur 9, wobei die Seitenwände nun aneinander verriegelt sind,
- Fig. 10b: die Form der Figur 10a in einer perspektivischen Unteransicht,
- Fig. 11: eine schematische Draufsicht auf einen Eckbereich der Form in einer Darstellung gemäß Ansichtspfeil XI in Figur 10a, und
- Fig. 12: die Form der Figur 1 in einer schematischen Rückansicht.

Die Ausführungsbeispiele der Erfindung werden anhand der nachfolgenden Beschreibung der Zeichnungen erläutert:
Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

Ein Ausführungsbeispiel einer erfindungsgemäßen Form wird in den Zeichnungen in seiner Gesamtheit mit dem Bezugszeichen 10 bezeichnet.

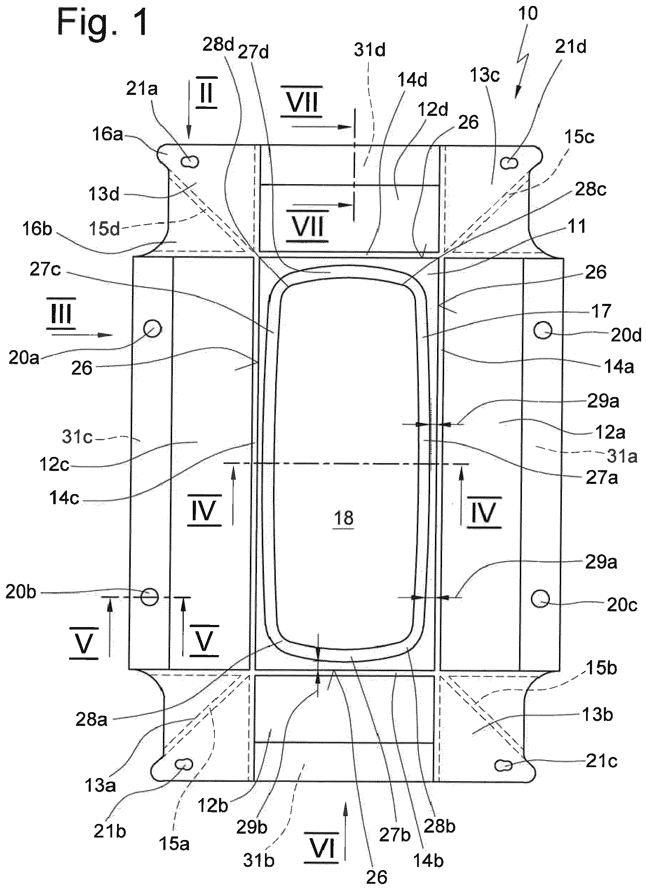

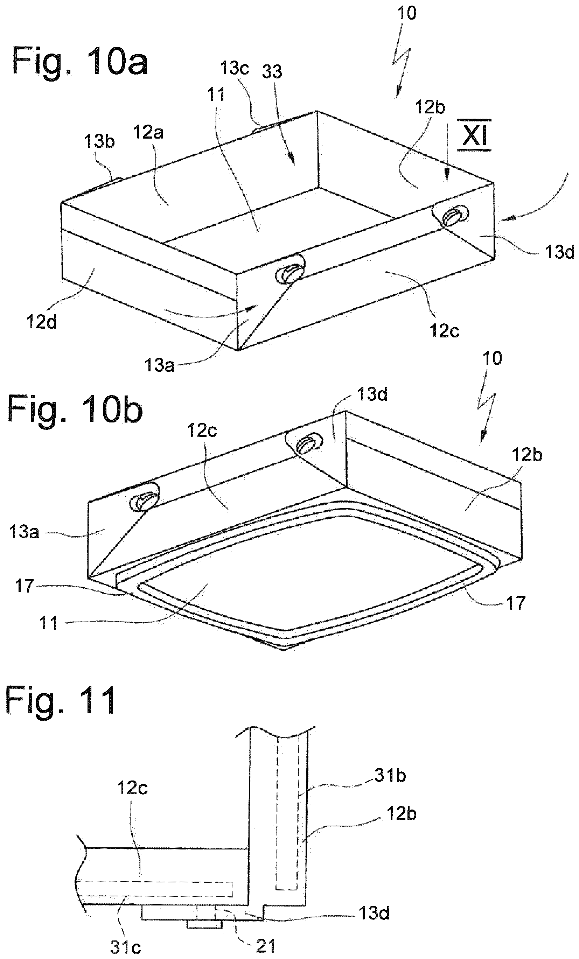

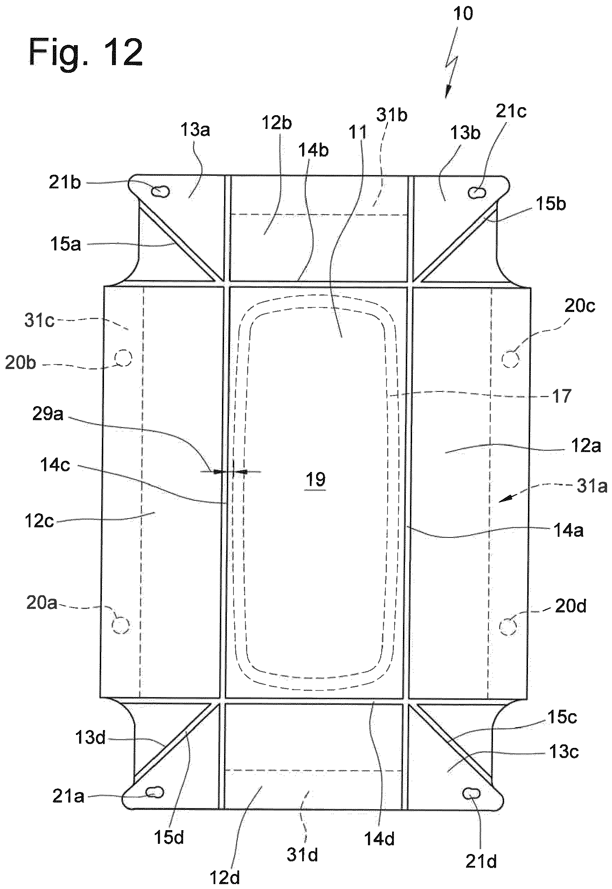

Die Figuren 1 und 12 zeigen die erfindungsgemäße Form in einem flachliegenden Zustand. Die Form 10 ist hier nach Art einer Matte ausgebildet. Demgegenüber zeigen Figur 10a und Figur 10b die Form in einem Gebrauchszustand, in der sie im Wesentlichen kastenförmig ist.

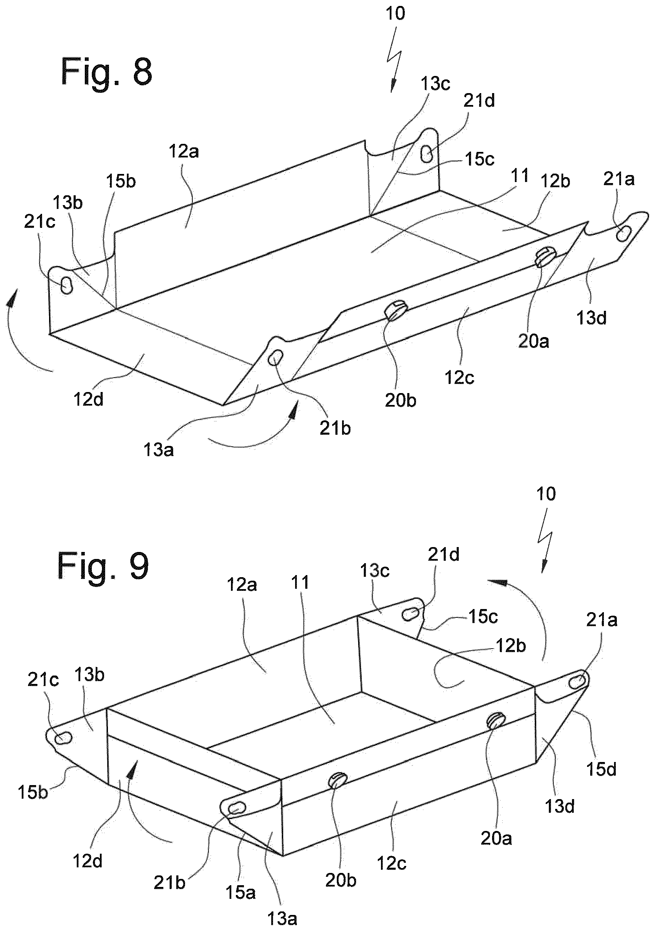

Angemerkt sei, dass die Ausführungsbeispiele der Figuren 1 und 12 einerseits und die Ausführungsbeispiele der Figuren 8 bis 11 andererseits geringfügige maßstäbliche Abweichungen vorsehen, dies zu illustrativen Zwecken.

Eine erfindungsgemäße Form 10, umfasst wie am besten aus Figur 1 ersichtlich, einen Boden 11, der im Wesentlichen rechteckig ist. Bei nicht dargestellten weiteren Ausführungsbeispielen weist der Boden 11 eine andere Kontur, z.B. eine quadratische oder eine ovale oder eine kreisförmige Kontur auf.

Der Boden 11 weist eine Unterseite 18 und eine Oberseite 19 auf.

An den Boden 11 sind vier Seitenwände 12a, 12b, 12c, 12d angebunden. Die Längsseitenwände werden mit den Bezugszeichen 12a und 12c bezeichnet, die Schmalseitenwände mit den Bezugszeichen 12b und 12d.

In den Eckbereichen der Matte, nämlich jeweils zwischen zwei Seitenwänden 12a, 12b, 12c und 12d, ist jeweils ein Verbindungslappen 13a, 13b, 13c, 13d angeordnet. Der Verbindungslappen 13a, 13b, 13c, 13d besteht - wie im Übrigen auch die Bodenwand 11 und die Seitenwände 12a, 12b, 12c, 12d aus einem flexiblen, insbesondere weichelastischen, Kunststoff, insbesondere aus einem lebensmittelechten Silikonkautschuk.

Das Grundprinzip einer solchen Form ist in der eingangs erwähnten Druckschrift des Standes der Technik bereits hinreichend beschrieben.

Ausgehend von einer Position der Form 10 in flachliegendem Zustand gemäß Figur 12, werden zunächst die Längsseitenwände 12a und 12c hochgeklappt, das heißt in ihre aufrechte Position verlagert. Dieser Vorgang ist in Figur 8 ersichtlich. Dabei werden in die Seitenwände, entlang der Biegenlinien 14a, 14c um etwa 90 Grad verlagert.

Sodann werden - ausgehend von einer Position gemäß Figur 8 - , auch noch die Schmalseitenwände 12b, 12d verlagert und es wird eine Zwischenmontageposition gemäß Figur 9 erreicht.

Bei dem Hochklappen der Schmalseitenwände 12b, 12d werden auch die Verbindungslappen 13a, 13b, 13c, 13d entlang von Faltlinien 15a, 15b, 15c, 15d gefaltet.

Figur 1 verdeutlicht im oberen linken Eckbereich, dass jeweils ein Verbindungslappen 13d entlang einer Faltlinie 15d in zwei im Wesentlichen dreieckförmige Bereiche 16a, 16b unterteilt ist.

Die dreieckförmigen Bereiche falten sich aufeinander zu und bilden Taschen. Diese Situation zeigt Figur 9. Ausgehend von Figur 9 werden die dreieckförmigen Taschen nachfolgend, im Zuge der Montage der Form, entlang der in Figur 10a dargestellten Pfeile, also im Wesentlichen um eine vertikal ausgerichtete Achse herum, zugeklappt.

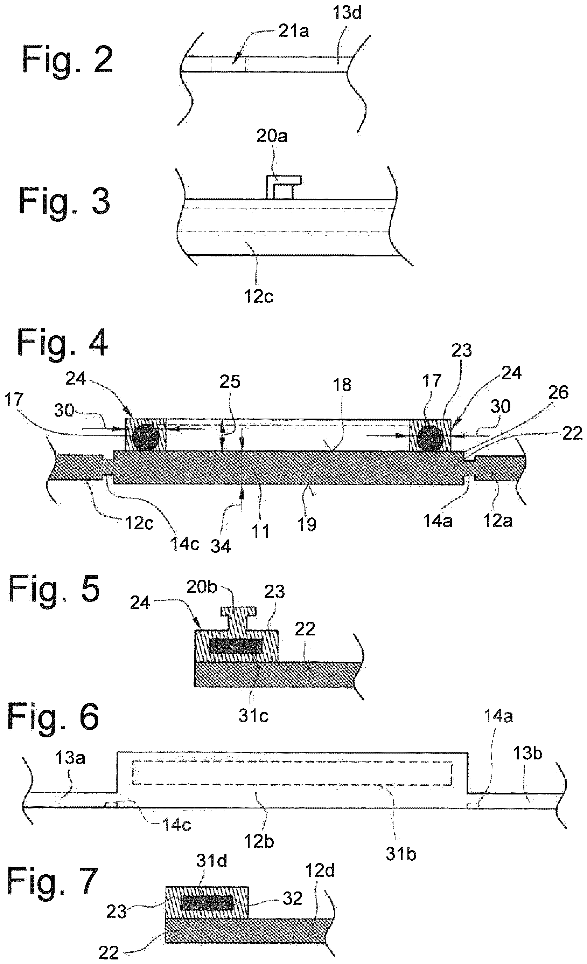

Verriegelungszapfen 20a, 20b, 20c, 20d werden mit entsprechenden Verriegelungslöchern 21a, 21b, 21c, 21d in Überdeckung gebracht. Die Verriegelungslöcher können z.B. schlüssellochartig ausgebildet sein und einen verbreiterten und einen demgegenüber schmaleren Bereich aufweisen. Die Verriegelungszapfen 20a, 20b, 20c, 20d können, wie dies in Figur 3 und 5 verdeutlicht ist, z.B. eine z.B. pilzkopfartige Verbreiterung aufweisen.

Aufgrund der Elastizität des flexiblen Kunststoffmaterials der Verbindungslappen 13a, 13b, 13c, 13d wird eine dauerhafte Verriegelung der Form gemäß den Figuren 10a und 10b im Gebrauchszustand erreicht.

Die erfindungsgemäße Form 10 besteht vollständig aus weichem flexiblem Kunststoff.

An die durchgehend flexibel gehaltene Bodenwand 11 ist erfindungsgemäß aber zusätzlich ein umlaufender Rahmen 17 angebracht. Dieser ist am besten in den Figuren 1, 4 und 12 zu erkennen.

Der Rahmen 17 erstreckt sich im Wesentlichen entlang der Randkontur 26 des Bodens 11. Er umfasst vier gerade Abschnitte 27a, 27b, 27c, 27d, die nur geringfügig gekrümmt sind und entlang der entsprechenden Randkante des Bodens 11 verlaufen. Der umlaufende Rahmen 17 umfasst darüber hinaus vier gekrümmte Segmente 28a, 28b, 28c, 28d, wobei jeweils ein gekrümmtes Segment 28a, 28b, 28c, 28d jeweils zwei Abschnitte 27a, 27b, 27c, 27d miteinander verbindet.

Der Rahmen 17 kann aus Metall bestehen. Er kann, wie die Darstellung der Figur 4 illustriert, z.B. einen rechteckförmigen oder quadratischen Querschnitt aufweisen.

Figur 4 veranschaulicht, dass der Rahmen 17 einen metallischen Kern mit kreisförmigem Querschnitt aufweisen kann. Dieser Kern kann z.B. von einem Runddraht gebildet sein. Der umlaufende Rahmen 17 kann also in Umlaufrichtung einen gebogenen Runddrahtkern aufweisen.

Der Rahmen 17 kann eine Umhüllung 24 oder Ummantelung aus einem weichen Kunststoff umfassen.

Das Material 22, aus dem der Boden 11 gebildet ist, kann ein erster Kunststoff und das Material 23, aus dem die Umhüllung 24 des Rahmens 17 gebildet ist, kann von einem zweiten Kunststoff gebildet sein. Beide Kunststoffe können gleiche oder geringfügig unterschiedliche Eigenschaften aufweisen, z.B. auch unterschiedliche Farben. Eine Herstellung einer solchen Form kann unter Verwendung eines umlaufenden Rahmens 17 in einer 2K-Form erfolgen.

Der Rahmen 17 steht von der Unterseite 18 des Bodens 11 vor. In Figur 4 ist die Höhe des Rahmens 17 mit dem Bezugszeichen 25 bezeichnet. Die Höhe 25 des Rahmens 17 entspricht der Summe des Außendurchmessers des metallischen Kerns und der Dicke der Kunststoffummantelung 24.

Die Höhe 25 des Rahmens 17 ermöglicht eine Beabstandung der Unterseite 18 des Bodens 11 von einer in den Figuren nicht dargestellten Auflagefläche. Hierdurch wird eine definierte Auflage erreicht.

Der Rahmen 17 ist umlaufend, so dass er in sich steif ausgebildet ist, insbesondere verdrehsteif und biegesteif. Damit wird auf einfache Weise, gemäß der Erfindung, eine einfache Konstruktion, und unter Bereitstellung optimierter Verstärkungseigenschaften auf einfache Weise eine Stabilisierung des Bodens 11 erreicht.

An den freien Rändern der Seitenwände 12a, 12b, 12c, 12d finden sich vorteilhafter Weise jeweils Verstärkungselemente 31. Ein solches Verstärkungselement 31c ist in Figur 5 und ein weiteres Verstärkungselement 31d ist in Figur 7 dargestellt.

Wiederum sind die Verstärkungselemente 31a, 31b, 31c, 31d aus einem sehr harten Material bereitgestellt, vorzugsweise aus Metall.

Die Verstärkungselemente 31a, 31b, 31c, 31d sind wiederum von einer Umhüllung 24 aus einem Kunststoff 23 umgeben oder ummantelt.

Wie die Figuren 1 und 4 verdeutlichen, ist der Rahmen 17 gegenüber den Randkanten des Bodens 11 nach innen eingerückt. Das entsprechende Einrückungsmaß ist in den Figuren mit dem Bezugszeichen 29a, 29b bezeichnet. Dadurch dass der umlaufende Rahmen 17 gegenüber der Randkontur 26 des Bodens 11 eingerückt ist, wird die Handhabbarkeit der Form 10 weiter verbessert.

Der Rahmen 17 weist darüber hinaus eine Breite 30 auf, die in Figur 4 bezeichnet ist.

Der Rahmen 17 kann insgesamt rechteckig oder quadratisch ausgebildet sein.

Die Höhe 25 des Rahmens 17 kann in der Größenordnung der Wandstärke 34 des Bodens 11 liegen, oder auch ein mehrfaches, z.B. fünffaches oder siebenfaches dieser Wandstärke 34 betragen.

Von der Erfindung ist umfasst, wenn die Wandstärke 34 des Bodens 11 und/ oder die Wandstärke einer Seitenwand zwischen 0,5 mm und 4 mm beträgt. Von der Erfindung ist auch umfasst, wenn die Höhe 25 des Rahmens 17 zwischen 3 mm und 12 mm beträgt. Von der Erfindung ist weiter umfasst, wenn die Breite 30 des Rahmens 17 zwischen 3 mm und 10 mm.

Die Verstärkungselemente 31 weisen einen Querschnitt auf, der in Figur 7 mit dem Bezugszeichen 32 bezeichnet ist. Der Querschnitt ist rechteckig.

Die erfindungsgemäße Form 10 umfasst einen umlaufenden Rahmen 17 am Boden 11 und im montierten Zustand gemäß Figur 10 einen weiteren, umlaufenden Rahmen am oberen Rand, bereitgestellt durch die miteinander verriegelten vier Seitenwände 12a, 12b, 12c, 12d. Damit wird eine Art Skelettstruktur bereitgestellt, mit einem unteren umlaufenden Rahmen 17 und einem oberen umlaufenden Rahmen 31a, 31b, 31c, 31d.

Bis auf die steifen Rahmenelemente in Form des umlaufenden Rahmens 17 und des oberen segmentierten Rahmens bereitgestellt durch die Verstärkungselemente 31a, 31b, 31c, 31d besteht die gesamte Form 11 aus weichem, flexiblem gummielastischem Silikon oder silikonkautschukartigen Material.

Die beiden Rahmen 17, 31a, 31b, 31c, 31d verleihen der erfindungsgemäßen Form aber eine sehr hohe Stabilität.

Zugleich ist aufgrund der Lösbarkeit der Wände 12a, 12b, 12c, 12d eine platzsparende Unterbringung möglich.

Die Montage der Form 10 ist erleichtert, da beim Zusammenbau, beispielsweise in einer Zwischenposition gemäß den Figuren 8 und 9 eine Bedienperson die Form 10 besser fassen und greifen kann. Die Form 10 liegt bei einem solchen Ergreifen ruhiger und definierter in der Hand, sodass eine Befestigung und Verriegelung der Seitenelemente 12a, 12b, 12c, 12d aneinander definierter, besser und ruhiger erfolgen kann. Die Montage ist damit erleichtert, komfortabler und auch schneller durchführbar.

## Patentansprüche

1. Form (10) zur Aufnahme von Lebensmitteln nach Art einer Back- oder Kochform, umfassend einen Boden (11) und wenigstens vier Seitenwände (12a, 12b, 12c, 12d), wobei die Seitenwände (12a, 12b, 12c, 12d) aus einem flachliegenden Zustand, in dem die Form nach Art einer Matte ausgebildet ist, in eine relativ zu dem Boden (11) aufrechte Gebrauchsposition überführbar und in ihrer Gebrauchsposition lösbar verriegelbar sind, wobei der Boden (11) und die Seitenwände (12a, 12b, 12c, 12d) aus einem flexiblen Kunststoff (22, 23) bestehen, **dadurch gekennzeichnet, dass** sich entlang einer Unterseite (18) des Bodens (11) ein umlaufender Rahmen (17) erstreckt.

2. Form (10) nach Anspruch 1, **dadurch gekennzeichnet, dass** der Rahmen (17) aus einem Material besteht, oder einen Kern aus einem Material umfasst, das härter ist als der Kunststoff.

3. Form (10) nach Anspruch 1 oder 2, **dadurch gekennzeichnet, dass** der Rahmen (17) oder ein Kern des Rahmens aus Metall besteht.

4. Form (10) nach einem der Ansprüche 1 bis 3, **dadurch gekennzeichnet, dass** der Rahmen (17) einen Mantel aus Weichkunststoff umfasst.

5. Form (10) nach einem der Ansprüche 1 bis 4, **dadurch gekennzeichnet, dass** der Rahmen (17) von der Unterseite (18) des Bodens (11) nach unten vorsteht.

6. Form (10) nach einem der Ansprüche 1 bis 5, **dadurch gekennzeichnet, dass** eine Oberseite (19) des Bodens (11) durchgängig plan ausgebildet ist.

7. Form (10) nach einem der vorangegangenen Ansprüche, **dadurch gekennzeichnet, dass** der Boden (11) rechteckig ausgebildet ist.

8. Form (10) nach einem der vorangegangenen Ansprüche, **dadurch gekennzeichnet, dass** der Rahmen (17) einer Randkontur (26) des Bodens (11) folgt oder im Wesentlichen folgt.

9. Form (10) nach einem der vorangegangenen Ansprüche, **dadurch gekennzeichnet, dass** der Rahmen (17) im Wesentlichen rechteckig ausgebildet ist und vier geradlinig ausgebildete (27a, 27b, 27c, 27d) oder nur geringfügig gekrümmt ausgebildete Abschnitte (27a, 27b, 27c, 27d) umfasst, die parallel oder im Wesentlichen parallel zu Randkanten (26) des Bodens (11) ausgerichtet sind.

10. Form (10) nach Anspruch 9, **dadurch gekennzeichnet, dass** der Rahmen (17) vier gekrümmte Segmente (28a, 28b, 28c, 28d) aufweist, wobei jeweils ein Segment (28a, 28b, 28c, 28d) zwei der Abschnitte (27a, 27b, 27c, 27d) miteinander verbindet.

11. Form (10) nach einem der vorangegangenen Ansprüche, **dadurch gekennzeichnet, dass** der Rahmen (17) umlaufend relativ zu Randkanten des Bodens (11) nach innen eingerückt angeordnet ist.

12. Form (10) nach einem der vorangegangenen Ansprüche, **dadurch gekennzeichnet, dass** der Rahmen (17) einen rechteckigen Querschnitt (32), insbesondere einen quadratischen oder im wesentlichen quadratischen Querschnitt (32), oder einen kreisförmigen oder ovalen Querschnitt (32) aufweist.

13. Form (10) nach einem der vorangegangenen Ansprüche, **dadurch gekennzeichnet, dass** ein Querschnitt (32) des Rahmens (17) eine Höhe (25) aufweist, gemessen entlang einer Richtung quer zu einer Erstreckung des Bodens (11), die zwischen 3 und 8 mm beträgt.

14. Form (10) nach einem der vorangegangenen Ansprüche, **dadurch gekennzeichnet, dass** ein Querschnitt des Rahmens (17) eine Breite (30) aufweist, gemessen entlang einer Richtung quer zu einer Längserstreckung des Rahmens (17), und entlang einer Erstreckung des Bodens (11), die zwischen 3 und 8 mm beträgt.

15. Form (10) nach einem der vorangegangenen Ansprüche, **dadurch gekennzeichnet, dass** an einem oberen Rand von wenigstens zwei einander gegenüberliegenden Seitenwänden (12a, 12b, 12c, 12d), insbesondere an einem oberen Rand einer jeden Seitenwand (12a, 12b, 12c, 12d), gradlinig ausgebildete Verstärkungselemente (31a, 31b, 31c, 31d) angeordnet sind.
